# EUROPÄISCHE PATENTSCHRIFT

(11) **EP 2 265 678 B1**
(45) Veröffentlichungstag und Bekanntmachung des Hinweises auf die Patenterteilung: **09.07.2014**
(21) Anmeldenummer: 09710907.8
(22) Anmeldetag: 12.02.2009
(51) Int. Cl.: C09D 7/00, C09C 1/30, C08K 3/36, C08K 9/00, C08K 9/02, C08K 9/04, C08K 9/08

(54) **FESTE KIESELSÄUREZUBEREITUNG**
SOLID SILICIC ACID PREPARATION
PRÉPARATION SOLIDE D'ACIDE SILICIQUE

(30) Priorität: 14.02.2008 EP 08151429
(43) Veröffentlichungstag der Anmeldung: 29.12.2010
(73) Patentinhaber: BASF SE, 67056 Ludwigshafen (DE)
(72) Erfinder: REISACHER, Hans Ulrich, 67133 Maxdorf (DE); MAUTHE, Uwe, 68239 Mannheim (DE)
(74) Vertreter: Scheffler, Götz
(86) Internationale Anmeldenummer: PCT/EP2009/051605
(87) Internationale Veröffentlichungsnummer: WO 2009/101121

(56) Entgegenhaltungen:
- EP-A1- 1 160 279
- US-A1- 2006 134 423
- DATABASE WPI Week 199212 Thomson Scientific, London, GB; AN 1992-093649 XP002598731 & JP 4 037603 A (MIZUSAWA CHEMICAL IND KK) 7. Februar 1992 (1992-02-07)
- DATABASE WPI Week 199901 Thomson Scientific, London, GB; AN 1999-005542 XP002598732 & JP 10 279997 A (KAO CORP) 20. Oktober 1998 (1998-10-20)

## Beschreibung

Die vorliegende Erfindung betrifft feste Kieselsäurezubereitungen, Verfahren zu deren Herstellung sowie Verfahren zum Einbringen in hochmolekulare organische oder anorganische Materialien, wie zum Beispiel Lacke, Farben und Kunststoffe.

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösemittel oder Mischungen davon enthalten. Hierbei werden typischerweise weitere Komponenten eingesetzt. Neben anionischen, kationischen, nicht-ionischen oder amphoteren Dispergiermitteln weisen solche Präparationen in der Regel weitere Hilfsmittel zur Einstellung von Fließ- und Trocknungseigenschaften, Mittel zur Erhöhung der Gefrierbeständigkeit, Verdicker, Antihautmittel und Biozide auf.

Darüber hinaus stellen auch Mattierungsmittel solche Hilfsstoffe dar. Mattierungsmittel auf Basis gefällter Kieselsäuren sind im Stand der Technik bekannt und haben folgende Nachteile: Die hohe Porosität bewirkt einen hohen Bedarf an Binde- und Lösemittel. Selbst mit einem Gehalt von 50 Gew.-% Wasser sind solche Kieselsäuren frei fließende Pulver. Darüber hinaus ist ein Benetzen vor Verwendung beispielsweise von Anstrichmitteln erforderlich, damit Wasser aus den Kapillaren der Kieselsäure verdrängt wird. Weiterhin weisen solche gefällten Kieselsäuren ein geringes Schüttvolumen auf, so dass diese stark staubend sind. Aus diesen Gründen weisen Kieselsäuren in flüssigen Dispersionen meist einen sehr geringen Gehalt auf, wobei üblicherweise keine Gehalte > 20 Gew.-% erhalten werden. Der Mattierungseffekt ist auch sehr stark abhängig von der Dispergierung des Mattierungsmittels.
Vergleichbare Eigenschaftsprofile wie Mattierungsmittel auf Basis gefällter Kieselsäure haben auch Hilfsmittel auf Basis pyrogener Kieselsäuren die zur Steuerung von Rheologie, Absetzverhalten, Haftfestigkeit, Kratzfestigkeit, und zur Pigmentstabilisierung eingesetzt werden. Die Einarbeitung in Lacke und Farben erfolgt üblicherweise durch geeignete Dispergieraggregate wie Kugel- und Perlmühlen

Es besteht daher ein Bedarf an Hilfsmitteln, wie z.B. Mattierungsmitteln, auf Basis von Kieselsäuren, die die oben beschriebenen Nachteile zumindest teilweise nicht aufweisen und insbesondere wenig staubend, gut dosierbar mit Stir-in-Eigenschaften und/oder ohne Vorbenetzung beispielsweise direkt in Lacke und Farben eingerührt werden können.

Die Aufgabe wird gelöst durch eine feste Kieselsäurezubereitung, bestehend aus den Komponenten
(A) 20 bis 80 Gew.-% bezogen auf das Gesamtgewicht der Zubereitung einer Kieselsäure;
(B) 20 bis 50 Gew.-% bezogen auf das Gesamtgewicht der Zubereitung mindestens eines Additivs ausgewählt aus der Gruppe bestehend aus ein wasserlösliches nichtionisches oberflächenaktives Additiv auf der Basis von Polyethern, ein wasserlösliches carboxylatgruppenhaltiges oberflächenaktives Additiv, ein Polyurethan, ein anionisches oberflächenaktives Additiv auf der Basis von sauren Phosphorsäure-, Phosphonsäure-, Schwefelsäure- oder Sulfonsäureestern;
(C) gegebenenfalls weitere Komponenten, wobei die weiteren Komponenten keine Pigmente enthalten und die Summe sämtlicher Komponenten (A), (B) und (C) 100 Gew.-% ergeben, wobei die Komponente (C) zumindest 0,1 bis 5 Gew.-% bezogen auf das Gesamtgewicht der Zubereitung eines Oxidationsschutzmittels enthält.

Es hat sich nämlich gezeigt, dass die erfindungsgemäßen festen Kieselsäurezubereitungen die oben genannten Nachteile zumindest teilweise nicht aufweisen. Insbesondere ist es durch die erfindungsgemäßen festen Kieselsäurezubereitungen möglich, ein staubfreies Einwiegen und eine direkte Zugabe in Lacke und Farben zu ermöglichen. Darüber hinaus können Schüttvolumina von mehr als 200 g/l erreicht werden. Weiterhin ist eine leichte Dosierbarkeit über Dosierapparate für das Feststoffhandling (Granulate) möglich. Auch ein hoher Gehalt an Kieselsäure kann erreicht werden. Die erfindungsgemäßen Kieselsäurezubereitungen erfordern kein Vorbenetzen und die Zubereitung absorbiert nicht im vergleichbaren Maße Wasser aus wässrigen Lacken und Farben, so dass Bindemittelflokation auftritt.

Die erfindungsgemäßen festen Kieselsäurezubereitungen weisen darüber hinaus hohe Kompatibilität in verschiedenen Lack- und Bindemitteln auf und es zeigen sich nicht im vergleichbaren Maße Probleme mit unterschiedlichen Brechungsindices, welche durch nicht reduzierbare Restmengen an Luft und Wasser in Poren zu Problemen führen kann.

Die feste Kieselsäurezubereitung gemäß der vorliegenden Erfindung enthält als Komponente (A) 20 bis 80 Gew.-% bezogen auf das Gesamtgewicht der Zubereitung eine Kieselsäure.

Vorzugsweise beträgt der Anteil der Komponente (A) 30 bis 60 Gew.-% bezogen auf das Gesamtgewicht der Zubereitung.

Grundsätzlich können alle gefällten und getrockneten Kieselsäuren als Bestandteil der Komponente (A) dienen. Auch pyrogene Kieselsäuren sind einsetzbar. Dabei können diese gegebenenfalls nach dem Trocknen noch gemahlen werden oder mit einer Nachbehandlung wie Wachsen oder Silikaten versehen werden. Selbstverständlich können auch verschiedene Kieselsäuren unterschiedlicher Herkunft als Gemische als Komponente (A) der festen Kieselsäurezubereitung gemäß der vorliegenden Anmeldung dienen.

Im Rahmen der vorliegenden Erfindung wird unter dem Begriff "Kieselsäure" auch Siliziumdioxid bezeichnet.

Gefällte Kieselsäuren erhält man typischerweise durch Reaktion von Wasserglas mit Schwefelsäure.

Pyrogene Kieselsäuren werden typischerweise durch Reaktion von Siliziumtetrachlorid mit Wasser unter Abscheidung von Chlorwasserstoffgasen durch Flammenhydrolyse erhalten.

Hersteller von Kieselsäuren sind beispielsweise Evonik (Sipernat^{®}, Ultrasil^{®} und Sident^{®}, Aerosil^{®}, Aerodisp^{®}, Aeroxide^{®}, Aeroperl^{®,} Acematt^{®}), Wacker Chemie AG (HDK^{®}), Dupont (LoVel, HiSil), Grace (Syloid^{®}).

Weiterhin enthält die erfindungsgemäße feste Kieselsäurezubereitung 20 bis 50 Gew.-% bezogen auf das Gesamtgewicht der Zubereitung mindestens eines Additivs ausgewählt aus der Gruppe bestehend aus einem wasserlöslichen, nicht-ionischen oberflächenaktiven Additiv auf der Basis von Polyethern (B1), einem wasserlöslichen carboxylatgruppenhaltigen oberflächenaktiven Additiv (B2), einem Polyurethan (B3), einem anionischen, oberflächenaktiven Additiv auf der Basis von sauren Phosphorsäure-, Phosphonsäure-, Schwefelsäure- oder Sulfonsäureester (B4).

Die oben genannten oberflächenaktiven Additive, welche die Komponente (B) bilden, weisen bevorzugt einen Anteil von 30 bis 50 Gew.-% bezogen auf das Gesamtgewicht der Zubereitung auf.

Es kann ein Additiv oder ein Gemisch mehrerer Additive die Komponente (B) der erfindungsgemäßen festen Kieselsäurezubereitung bilden.

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind hier vor allem Blockcopolymerisate, insbesondere Polypropylenoxid- und Polyethylenoxidblöcke oder Poly(phenylethylenoxid)- und Polyethylenoxidblöcke aufweisende Polymerisate, und auch statistische Copolymerisate dieser Alkylenoxide als Komponente B1 geeignet.

Diese Polyalkylenoxide können durch Polyaddition der Alkylenoxide an Startermoleküle, wie gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide sowie aromatische Carbonsäureamide und Sulfonsäureamide, hergestellt werden. Die aromatischen Startermoleküle können dabei durch C₁-C₂₀-Alkyl oder C₇-C₃₀-Aralkyl substituiert sein. Üblicherweise werden 1 bis 300 mol, bevorzugt 3 bis 150 mol, Alkylenoxid je mol Startermolekül eingesetzt, im Fall aromatischer Startermoleküle liegen die Alkylenoxidmengen vor allem bei 2 bis 100 mol, vorzugsweise bei 5 bis 50 mol und insbesondere bei 10 bis 30 mol. Die Polyadditionsprodukte können eine terminale OH-Gruppe aufweisen oder endgruppenverschlossen sein, z.B. als C₁-C₆-Alkylether vorliegen.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5 000 auf.

Als Beispiele für die oben genannten aromatischen Alkohole seien neben unsubstituiertem Phenol und α- und β-Naphthol auch die alkylsubstituierten Produkte, die insbesondere durch C₁-C₁₂-Alkyl, vorzugsweise C₄-C₁₂- bzw. C₁-C₄-Alkyl, substituiert sind, und die aralkylsubstituierten Produkte, insbesondere C₇-C₃₀-aralkylsubstituiertes Phenol, wie Hexylphenol, Heptylphenol, Octylphenol, Nonylphenol, Isononylphenol, Undecyl-phenol, Dodecylphenol, Di- und Tributylphenol und Dinonylphenol, sowie Bisphenol A und seine Umsetzungprodukte mit Styrol, vor allem in den ortho-Positionen zu beiden OH-Gruppen durch insgesamt 4 Phenyl-1-ethylreste substituiertes Bisphenol A, genannt.

Neben den Alkylenoxidaddukten an einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R-NR¹)ₙ-H (R: C₂-C₆-Alkylen; R¹: Wasserstoff oder C₁-C₆-Alkyl; n: 1 bis 5) entsprechen. Im Einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymere an Ethylenoxid liegt üblicherweise bei etwa 10 bis 90 Gew.-%.

Die Blockcopolymere auf Basis mehrwertiger Amine weisen in der Regel mittlere Molekulargewichte Mₙ von 1000 bis 40000, vorzugsweise 1500 bis 30000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.

Die Blockcopolymere auf Basis mehrwertiger Alkohole weisen im allgemeinen mittlere Molekulargewichte Mₙ von 1000 bis 20000, vorzugsweise 1000 bis 15000, auf.

Derartige Alkylenoxidblockcopolymere sind bekannt und im Handel z.B. unter den Namen Tetronic^{®} und Pluronic^{®} (BASF) erhältlich.

Als anionische wasserlösliche oberflächenaktive Additive auf der Basis von Polymerisaten ungesättigter Carbonsäuren (B2) eignen sich insbesondere Additive aus der Gruppe der Homo- und Copolymerisate von ethylenisch ungesättigten Monocarbonsäuren und/oder ethylenisch ungesättigten Dicarbonsäuren, die keine Säurefunktion enthaltende Vinylmonomere zusätzlich einpolymerisiert enthalten können, der Alkoxylierungsprodukte dieser Homo- und Copolymerisate und der Salze dieser Homo- und Copolymerisate und ihrer Alkoxylierungsprodukte.

Als Beispiele für die carboxylgruppenhaltigen Monomere und die Vinylmonomere seien genannt:
- Acrylsäure, Methacrylsäure und Crotonsäure;
- Maleinsäure, Maleinsäureanhydrid, Maleinsäuremonoester, Maleinsäuremonoamide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind;
- Vinylaromaten, wie Styrol, Methylstyrol und Vinyltoluol; Ethylen, Propylen, Isobuten, Diisobuten und Butadien; Vinylether, wie Polyethylenglykolmonovinylether;
   Vinylester linearer oder verzweigter Monocarbonsäuren, wie Vinylacetat und Vinylpropionat; Alkylester und Arylester ethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl-(meth)acrylat sowie Phenyl-, Naphthyl- und Benzyl(meth)acrylat; Dialkylester von ethylenisch ungesättigten Dicarbonsäuren, wie Dimethyl-, Diethyl-, Dipropyl-, Diisopropyl-, Dibutyl-, Dipentyl-, Dihexyl-, Di-2-ethylhexyl-, Dinonyl-, Dilauryl- und Di2-hydroxyethylmaleinat und -fumarat; Vinylpyrrolidon; Acrylnitril und Methacrylnitril, wobei Styrol, Isobuten, Diisobuten, Acrylsäureester und Polyethylenglykolmonovinylether bevorzugt sind.

Als Beispiele für bevorzugte Homopolymerisate dieser Monomere sind insbesondere Polyacrylsäuren zu nennen.

Die Copolymerisate der genannten Monomere können aus zwei oder mehreren, insbesondere drei verschiedenen Monomeren aufgebaut sein. Es können statistische Copolymerisate, alternierende Copolymerisate, Blockcopolymerisate und Pfropfcopolymerisate vorliegen. Als bevorzugte Copolymerisate seien Styrol/Acrylsäure-, Acrylsäure/- Maleinsäure-, Acrylsäure/Methacrylsäure-, Butadien/Acrylsäure-, Isobuten/Maleinsäure-, Düsobuten/Maleinsäure- und Styrol/Maleinsäure-Copolymerisate, die jeweils als zusätzliche Monomerbestandteile Acrylsäureester und/oder Maleinsäureester enthalten können, genannt.

Vorzugsweise liegen die Carboxylgruppen der nicht alkoxylierten Homo- und Copolymerisate zumindest teilweise in Salzform vor, um Wasserlöslichkeit zu gewährleisten. Geeignet sind beispielsweise die Alkalimetallsalze, wie Natrium- und Kaliumsalze, und die Ammoniumsalze.

Üblicherweise weisen die nicht alkoxylierten polymeren Additive (B2) mittlere Molekulargewichte M_{w} von 900 bis 250 000 auf. Die für die einzelnen Polymerisate besonders geeigneten Molekulargewichtsbereiche hängen naturgemäß von deren Zusammensetzung ab. Im Folgenden werden für verschiedene Polymerisate beispielhaft Molekulargewichtsangaben gemacht: Polyacrylsäuren: M_{w} von 900 bis 250 000; Styrol/Acrylsäure-Copolymerisate: M_{w} von 1 000 bis 50 000; Acrylsäure/Methacrylsäure-Copolymerisate: M_{w} von 1 000 bis 250 000; Acrylsäure/Maleinsäure-Copolymerisate: M_{w} von 2 000 bis 70 000.

Neben diesen Homo- und Copolymerisaten selbst sind auch ihre Alkoxylierungsprodukte als Additive (B2) von besonderem Interesse.

Hierbei handelt es sich vor allem um die teilweise bis (soweit dies möglich ist) vollständig mit Polyetheralkoholen veresterten Polymerisate. In der Regel beträgt der Veresterungsgrad dieser Polymerisate 30 bis 80 Mol-%.

Für die Veresterung geeignet sind insbesondere Alkohole wie Ethanol, Propanol, Isopropanol, Butanol, Fettalkohole, die Polyetheralkohole selbst, vorzugsweise Polyethylenglykole und Polypropylenglykole, sowie deren einseitig endgruppenverschlossene Derivate, vor allem die entsprechenden Monoether, wie Monoarylether, z.B. Monophenylether, und insbesondere Mono-C₁-C₂₆-alkylether, z.B. mit Fettalkoholen veretherte Ethylen- und Propylenglykole, und die Polyetheramine, die z.B. durch Umwandlung einer terminalen OH-Gruppe der entsprechenden Polyetheralkohole oder durch Polyaddition von Alkylenoxiden an vorzugsweise primäre aliphatische Amine herstellbar sind. Bevorzugt sind dabei Polyethylenglykole, Polyethylenglykolmonoether und Polyetheramine. Die mittleren Molekulargewichte Mₙ der verwendeten Polyetheralkohole und ihrer Derivate liegen üblicherweise bei 200 bis 10 000.

Durch Steuerung des Verhältnisses von polaren zu unpolaren Gruppen können die oberflächenaktiven Eigenschaften der Additive (B2) gezielt eingestellt werden.

Derartige anionische oberflächenaktive Additive (B2) sind ebenfalls bekannt und im Handel z.B. unter den Namen Sokalan^{®} (BASF), Joncryl^{®} (Johnson Polymer), Alcosperse^{®} (Alco), Geropon^{®} (Rhodia), Good-Rite^{®} (Goodrich), Neoresin^{®} (Avecia), Orotan^{®} und Morez^{®} (Rohm & Haas), Disperbyk^{®} (Byk) sowie Tegospers^{®} (Degussa) erhältlich.

Als anionische oberflächenaktive Additive können diese Zubereitungen weiterhin Additive auf Polyurethanbasis (B3) enthalten.

Der Begriff Polyurethan umfasst dabei nicht nur die reinen Umsetzungsprodukte von mehrwertigen Isocyanaten (B3a) mit isocyanatreaktiven Hydroxygruppen enthaltenden organischen Verbindungen (B3b), sondern auch solche Umsetzungsprodukte, die durch den Zusatz von weiteren isocyanatreaktiven Verbindungen, z.B. von primäre oder sekundäre Aminogruppen tragenden Carbonsäuren, zusätzlich funktionalisiert sind.

Diese Additive zeichnen sich gegenüber anderen oberflächenaktiven Additiven durch ihre geringe Ionenleitfähigkeit und ihren neutralen pH-Wert aus.

Als mehrwertige Isocyanate (B3a) für die Herstellung der Additive (B3) eignen sich insbesondere Diisocyanate, es können aber auch Verbindungen mit drei oder vier Isocyanatgruppen eingesetzt werden. Es können sowohl aromatische als auch aliphatische Isocyanate verwendet werden.

Als Beispiele für bevorzugte Di- und Triisocyanate seien aufgeführt: 2,4-Toluylendiisocyanat (2,4-TDI), 4,4'-Diphenylmethandiisocyanat (4,4'-MDI), para-Xylylendiisocyanat, 1,4-Diisocyanatobenzol, Tetramethylxylylendiisocyanat (TMXDI), 2,4'-Diphenylmethandiisocyanat (2,4'-MDI) und Triisocyanatotoluol sowie Isophorondiisocyanat (IPDI), 2-Butyl-2-ethylpentamethylendiisocyanat, Tetramethylendiisocyanat, Hexamethylendiisocyanat, Dodecamethylendiisocyanat, 2,2-Bis(4-isocyanatocyclohexyl)propan, Trimethylhexandiisocyanat, 2-Isocyanatopropylcyclohexylisocyanat, 2,4,4- und 2,2,4-Trimethylhexamethylendiisocyanat, 2,4'-Methylenbis(cyclohexyl)diisocyanat, cis-Cyclohexan-1,4-diisocyanat, trans-Cyclohexan-1,4-diisocyanat und 4-Methylcyclo-hexan-1,3-diisocyanat (H-TDI).

Selbstverständlich können auch Mischungen von Isocyanaten (B3a) verwendet werden. Beispielhaft seien hier genannt: Mischungen von Strukturisomeren von 2,4-Toluylendiisocyanat und Triisocyanatotoluol, z.B. Mischungen aus 80 Mol-% 2,4-Toluylendiisocyanat und 20 Mol-% 2,6-Toluylendiisocyanat; Mischungen aus cis- und trans-Cyclohexan-1,4-diisocyanat; Mischungen von 2,4- oder 2,6-Toluylendiisocyanat mit aliphatischen Diisocyanaten, wie Hexamethylendiisocyanat und Isophorondiisocyanat.

Als isocyanatreaktive organische Verbindungen (B3b) eignen sich bevorzugt Verbindungen mit mindestens zwei isocyanatreaktiven Hydroxygruppen pro Molekül. Geeignet als Verbindung (B3b) sind jedoch auch Verbindungen, die nur eine isocyanatreaktive Hydroxygruppe pro Molekül aufweisen. Diese monofunktionalisierten Verbindungen können die mindestens zwei isocyanatreaktiven Hydroxygruppen pro Molekül enthaltenden Verbindungen bei der Umsetzung mit dem Polyisocyanat (B3a) teilweise oder auch ganz ersetzen.

Im Folgenden werden Beispiele für besonders bevorzugte isocyanatreaktive Verbindungen (B3b) mit mindestens zwei isocyanatreaktiven Hydroxygruppen pro Molekül aufgeführt.

Dabei handelt es sich um Polyetherdiole, Polyesterdiole, Polyesterdiole auf Lactonbasis, Diole und Triole mit bis zu 12 C-Atomen, Dihydroxycarbonsäuren, Dihydroxysulfonsäuren, Dihydroxyphosphonsäuren, Polycarbonatdiole, Polyhydroxyolefine und Polysiloxane mit im Mittel mindestens zwei Hydroxygruppen pro Molekül.

Geeignete Polyetherdiole (B3b) sind beispielsweise Homo- und Copolymerisate von C₂-C₄-Alkylenoxiden, wie Ethylenoxid, Propylenoxid und Butylenoxid, Tetrahydrofuran, Styroloxid und/oder Epichlorhydrin, die in Gegenwart eines geeigneten Katalysators, z.B. Bortrifluorid, erhältlich sind. Weiterhin geeignete Polyetherdiole sind durch (Co)Polymerisation dieser Verbindungen in Gegenwart eines Starters mit mindestens zwei aciden Wasserstoffatomen, z.B. von Wasser, Ethylenglykol, Thioglykol, Mercaptoethanol, 1,3-Propandiol, 1,4-Butandiol, 1,6-Hexandiol, 1,12-Dodecandiol, Ethylendiamin, Anilin oder 1,2-Di-(4-Hydroxyphenyl)propan, zu erhalten.

Beispiele für besonders geeignete Polyetherdiole (B3b) sind Polyethylenglykol, Polypropylenglykol, Polybutylenglykol und Polytetrahydrofuran sowie Copolymerisate davon.

Das Molekulargewicht Mₙ der Polyetherdiole beträgt bevorzugt 250 bis 5 000, besonders bevorzugt 500 bis 2 500.

Als isocyanatreaktive Verbindung (B3b) geeignete Polyesterdiole (Hydroxypolyester) sind allgemein bekannt.

Bevorzugte Polyesterdiole (B3b) sind die Umsetzungsprodukte von Diolen mit Dicarbonsäuren oder deren reaktiven Derivaten, z.B. Anhydriden oder Dimethylestern.

Als Dicarbonsäuren eignen sich gesättigte und ungesättigte aliphatische sowie aromatische Dicarbonsäuren, die zusätzliche Substituenten, wie Halogen, tragen können. Bevorzugte aliphatische Dicarbonsäuren sind gesättigte unverzweigte α,ω-Dicarbonsäuren, die 3 bis 22, vor allem 4 bis 12 C-Atome enthalten.

Beispiele für besonders geeignete Dicarbonsäuren sind: Bernsteinsäure, Glutarsäure, Adipinsäure, Korksäure, Azelainsäure, Sebacinsäure, 1,12-Dodecandicarbonsäure, Maleinsäure, Maleinsäureanhydrid, Fumarsäure, Itaconsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Terephthalsäure, Terephthalsäuredimethylester und Isophthalsäuredimethylester.

Als Diole eignen sich insbesondere gesättigte und ungesättigte aliphatische und cyclo-aliphatische Diole. Die besonders bevorzugten aliphatischen α,ω-Diole sind unverzweigt und weisen 2 bis 12, insbesondere 2 bis 8, vor allem 2 bis 4 C-Atome auf. Bevorzugte cycloaliphatische Diole leiten sich von Cyclohexan ab.

Beispiele für besonders geeignete Diole sind: Ethylenglykol, Propylenglykol, 1,3-Propandiol, 1,4-Butandiol, 2-Methylpropan-1,3-diol, 1,5-Pentandiol, Neopentylglykol, 1,6-Hexandiol, 1,8-Octandiol, 1,10-Decandiol, 1,12-Dodecandiol, cis- und trans-But-2-en-1,4-diol, 2-Butin-1 ,4-diol und cis- und trans-1,4-Di(hydroxymethyl)cyclohexan.

Das Molekulargewicht Mₙ der Polyesterdiole liegt bevorzugt bei 300 bis 5 000.

Als isocyanatreaktive Verbindung (B3b) geeignete Polyesterdiole auf Lactonbasis basieren insbesondere auf aliphatischen gesättigten unverzweigten ω-Hydroxycarbonsäuren mit 4 bis 22, bevorzugt 4 bis 8 C-Atomen. Es eignen sich auch verzweigte ω-Hydroxycarbonsäuren, bei denen ein oder mehrere -CH₂-Gruppen in der Alkylenkette durch -CH(C₁-C₄-Alkyl)- ersetzt sind.

Beispiele für bevorzugte ω-Hydroxycarbonsäuren sind γ-Hydroxybuttersäure und δ-Hydroxyvaleriansäure.

Selbstverständlich eignen sich auch die oben genannten Diole als isocyanatreaktive Verbindungen (B3b), wobei dieselben Bevorzugungen wie oben gelten.

Ebenfalls als isocyanatreaktive Verbindungen (B3b) geeignet sind Triole, die insbesondere 3 bis 12, vor allem 3 bis 8 C-Atome aufweisen. Beispiel für ein besonders geeignetes Triol ist Trimethylolpropan.

Als isocyanatreaktive Verbindungen (B3b) geeignete Dihydroxycarbonsäuren sind insbesondere aliphatische gesättigte Dihydroxycarbonsäuren, die vorzugsweise 4 bis 14 C-Atome enthalten, besonders geeignet. Ganz besonders geeignet sind Dihydroxycarbonsäuren der Formel 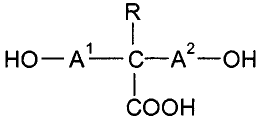 in A¹ und A² gleiche oder verschiedene C₁-C₄-Alkylenreste bedeuten und R für Wasserstoff oder C₁-C₄-Alkyl steht.

Besonders bevorzugtes Beispiel für diese Dihydroxycarbonsäuren ist Dimethylolpropionsäure (DMPA).

Weiterhin eignen sich als isocyanatreaktive Verbindungen (B3b) die entsprechenden Dihydroxysulfonsäuren und Dihydroxyphosphonsäuren, wie 2,3-Dihydroxypropanphosphonsäure.

Der Begriff Dihydroxycarbonsäure soll dabei auch Verbindungen umfassen, die mehr als eine Carboxylfunktion (bzw. Anhydrid- oder Esterfunktion) enthalten. Solche Verbindungen sind durch Umsetzung von Dihydroxyverbindungen mit Tetracarbonsäuredianhydriden, wie Pyromellitsäuredianhydrid oder Cyclopentantetracarbonsäuredianhydrid, im Molverhältnis 2 : 1 bis 1,05 : 1 in einer Polyadditionsreaktion erhältlich und weisen vorzugsweise ein mittleres Molekulargewicht Mₙ von 500 bis 10 000 auf.

Als Beispiele für geeignete Polycarbonatdiole (B3b) sind die Umsetzungsprodukte von Phosgen mit einem Überschuss an Diolen, insbesondere unverzweigten gesättigten aliphatischen α,ω-Diolen mit 2 bis 12, insbesondere 2 bis 8, vor allem 2 bis 4 C-Atomen zu nennen.

Als isocyanatreaktive Verbindung (B3b) geeignete Polyhydroxyolefine sind vor allem α,ω-Dihydroxyolefine, wobei α,ω-Dihydroxybutadiene bevorzugt sind.

Die weiterhin als isocyanatreaktive Verbindung (B3b) geeigneten Polysiloxane enthalten im Mittel mindestens zwei Hydroxygruppen pro Molekül. Besonders geeignete Polysiloxane weisen im Mittel 5 bis 200 Si-Atome (Zahlenmittel) auf und sind vor allem mit C₁-C₁₂-Alkylgruppen, insbesondere Methylgruppen, substituiert.

Als Beispiele für isocyanatreaktive Verbindungen (B3b), die nur eine isocyanatreaktive Hydroxygruppe aufweisen, seien insbesondere aliphatische, cycloaliphatische, araliphatische oder aromatische Monohydroxycarbonsäuren und -sulfonsäuren genannt.

Die Additive auf Polyurethanbasis (B3) werden durch Umsetzung der Verbindungen (B3a) und (B3b) hergestellt, wobei das Molverhältnis von (B3a) zu (B3b) in der Regel 2 : 1 bis 1 : 1, vorzugsweise 1,2 : 1 bis 1 : 1,2, beträgt.

Dabei ist es möglich, neben den vorstehend genannten isocyanatreaktiven Verbindungen (B3b) weitere Verbindungen mit isocyanatreaktiven Gruppen zuzusetzen, beispielsweise Dithiole, Thioalkohole, wie Thioethanol, Aminoalkohole, wie Ethanolamin und N-Methylethanolamin, oder Diamine, wie Ethylendiamin, und dadurch Polyurethane herzustellen, die neben den Urethangruppen noch Isocyanuratgruppen, Allophanatgruppen, Harnstoffgruppen, Biuretgruppen, Uretdiongruppen oder Carbodiimidgruppen tragen. Weitere Beispiele für solche isocyanatreaktiven Verbindungen sind aliphatische, cycloaliphatische, araliphatische oder aromatische Carbonsäuren und Sulfonsäuren, die mindestens zwei primäre und/oder sekundäre Aminogruppen tragen.

Selbstverständlich können auch entsprechende nur eine isocyanatreaktive Gruppe aufweisende Verbindungen, beispielsweise Monoalkohole, primäre und sekundäre Monoamine, Monoaminocarbon- und -sulfonsäuren und Mercaptane, zugesetzt werden. Übliche Einsatzmengen liegen bei bis zu 10 Mol-%, bezogen auf (B3a).

Vorzugsweise liegen die Carboxylgruppen der Umsetzungsprodukte (B3) zumindest teilweise in Salzform vor, um Wasserlöslichkeit zu gewährleisten. Geeignet sind beispielsweise Alkalimetallsalze, wie Natrium- und Kaliumsalze, und Ammoniumsalze.

Üblicherweise weisen die Additive (B3) mittlere Molekulargewichte M_{w} von 500 bis 250 000 auf.

Durch Steuerung des Verhältnisses von polaren zu unpolaren Gruppen können die oberflächenaktiven Eigenschaften der Additive (B3) gezielt eingestellt werden.

Derartige anionische oberflächenaktive Additive (B3) sind bekannt und im Handel z.B. unter den Namen Borchi^{®} GEN SN95 (Borchers) erhältlich.

Wasserlösliche anionische oberflächenaktive Additive auf der Basis von sauren Phosphorsäure-, Phosphonsäure-, Schwefelsäure- und/oder Sulfonsäureestern von Polyethern (B4) basieren insbesondere auf den Umsetzungsprodukten der oben aufgeführten Polyether (B1) mit Phosphorsäure, Phosphorpentoxid und Phosphonsäure bzw. Schwefelsäure und Sulfonsäure. Hierbei werden die Polyether in die entsprechenden Phosphorsäuremono- oder -diester und Phosphonsäureester bzw. die Schwefelsäuremonoester und Sulfonsäureester überführt. Diese sauren Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.

Derartige anionische oberflächenaktive Additive (B4) sind bekannt und im Handel z.B. unter den Namen Nekal^{®} (BASF), Tamol^{®} (BASF), Crodafos^{®} (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia) und Lutensit^{®} (BASF), Strodex (Dexter), erhältlich.

Wasserlösliche anionische Additive auf Basis von aromatischen Sulfonsäuren und Formaldehyd (B4) basieren insbesondere auf Naphthalinsulfonsäure und werden ebenfalls vorzugsweise in Salzform, insbesondere als Natriumsalz, eingesetzt. Ihr mittleres Molekulargewicht Mw liegt üblicherweise bei 4 000 bis 15 000. Die Additive sind ebenfalls bekannt und z.B. im Handel unter dem Namen Tamol^{®} (BASF) erhältlich.

Weitere geeignete Additive auf Basis von aromatischen Sulfonsäuren sind Alkylbenzolsulfonsäuren (Nuosperse^{®}, Elementis) in Salzform, insbesondere als Ammoniumsalze.

Darüber hinaus kann die feste Kieselsäurezubereitung gemäß der vorliegenden Erfindung als Komponente (C) gegebenenfalls weitere Komponenten aufweisen, wobei die Komponente (C) zumindest 0,1 bis 5 Gew.-% bezogen auf das Gesamtgewicht der Zubereitung eines Oxidationsschutzmittels enthält. Hierbei ist es jedoch von Bedeutung, dass die weiteren Komponenten keine Pigmente enthalten.

Dementsprechend enthält die Komponente (C), gegebenenfalls neben dem Oxidationsschutzmittel eine weitere Komponente oder mehrere weitere Komponenten, wobei diese Komponenten selbst aus einem oder mehreren Stoffen bestehen können. Hierbei sind sämtliche Komponenten und Stoffe denkbar, Füllstoffe.

Die Summe sämtlicher Komponenten der erfindungsgemäßen festen Kieselsäurezubereitung ergibt 100 Gew.-%.

Als Beispiele für geeignete Oxidationsschutzmittel seien die bekannten Klassen der sterisch gehinderten Phenole, der aromatischen Amine, der Thiosynergisten, der Phosphite und Phosphonite und der sterisch gehinderten Amine genannt.

Die Oxidationsschutzmittel auf Basis sterisch gehinderter Phenole enthalten als wesentlichen Baustein ein durch mindestens eine tert.-Butylgruppe in ortho-Position, insbesondere durch tert.-Butylgruppen in beiden ortho-Positionen, zur OH-Gruppe substituiertes Phenol. Die meisten bekannten Produkte enthalten mehrere dieser Bausteine, die über verschiedene Brückenglieder miteinander verbunden sind.

Bei den Oxidationsschutzmitteln auf Basis aromatischer Amine handelt es sich hauptsächlich um Diarylamine, Amin/Keton-Kondensationsprodukte, z.B. Anilin/Aceton-Kondensate und substituierte p-Phenylendiamine.

Beispiele für Thiosynergisten sind die Metallsalze von Dialkyldithiocarbaminsäuren, Zinkdialkyldithiophosphate und Ester (insbesondere Dilauryl-, Dimyristyl- und Distearylester) von Thiodipropionsäure.

Bei den Oxidationsschutzmitteln auf Basis von Phosphiten und Phosphoniten handelt es sich üblicherweise um die Ester der entsprechenden Phosphorsäuren mit alkylsubstituierten, insbesondere tert.-butylsubstituierten, Phenolen.

Die Oxidationsschutzmittel auf Basis von sterisch gehinderten Aminen (HALS) enthalten als wesentlichen Baustein ein 2,6-dialkylsubstituiertes, insbesondere ein -dimethylsubstituiertes, Piperidin, das in 4-Position über die verschiedensten Brückenglieder mit weiteren Piperidinbausteinen verknüpft ist.

Oxidationsschutzmittel sind allgemein bekannt und z.B. unter den Namen Irganox^{®}, Irgaphos^{®}, Chimassorb^{®} und Irgastab^{®} (Ciba), Topanol^{®} (ICI), Hostanox^{®} (Clariant) und Goodrite^{®} (Goodyear) erhältlich.

Darüber hinaus kann die Komponente (C) der erfindungsgemäßen festen Kieselsäurezubereitung weiterhin eine Füllstoffkomponente aufweisen. Diese Füllstoffkomponente kann wiederum einen oder mehrere Füllstoffe darstellen. Vorzugsweise enthält die Komponente (C) 0,1 bis 60 Gew.-% eines keine Eigenfarbe aufweisenden Füllstoffes.

Weiterhin bevorzugt beträgt der Anteil 10 bis 30 Gew.-% bezogen auf das Gesamtgewicht der Zubereitung.

Als Füllstoffe seien farblose oder weiße Füllstoffe genannt.

Diese farblosen oder weißen Füllstoffe weisen in der Regel einen Brechungsindex ≤ 1,7 auf. Beispielsweise beträgt der Brechungsindex von Kreide 1,55, von Baryt 1,64, von Kaolin 1,56, von Talk 1,57, von Glimmer 1,58 und von Silikaten 1,55.

Die Füllstoffe sind üblicherweise im Anwendungsmedium unlöslich und stammen insbesondere aus den folgenden chemischen Klassen, wobei sowohl Produkte natürlicher Herkunft als auch Produkte synthetischer Herkunft beispielhaft aufgeführt werden:
- Oxide und Hydroxide:
   natürlich: Aluminiumoxid und Magnesiumoxid;
   synthetisch: Aluminiumhydroxid und Magnesiumhydroxid;
- Talk, Kaolin, Glimmer;
- Carbonate:
   natürlich: Calcium- und Magnesiumcarbonate, wie Calcit, Kreide, Dolomit und Magnesit;
   synthetisch: gefälltes Calciumcarbonat;
- Sulfate:
   natürlich: Barium- und Calciumsulfate, wie Baryt und Gips;
   synthetisch: gefälltes Bariumsulfat.

Die Füllstoffe der Komponente (C) können die unterschiedlichsten Teilchenformen aufweisen. Beispielsweise kann es sich um Kugeln, Würfel, Plättchen oder Fasern handeln. Füllstoffe auf natürlicher Basis haben üblicherweise Teilchengrößen im Bereich von etwa 1 bis 300 µm. So weisen Handelsprodukte auf Basis natürlicher Kreide z.B. einen d₅₀-Wert von in der Regel 1 bis 160 µm auf. Teilchengrößen unter 1 µm liegen in der Regel nur bei synthetisch insbesondere durch Fällverfahren hergestellten Füllstoffen vor.

Bevorzugte Füllstoffe der Komponente (C) sind Carbonate und Sulfate, wobei natürliche und gefällte Kreide sowie Bariumsulfat besonders bevorzugt sind. Diese Produkte sind im Handel z.B. unter den Namen Omyacarb^{®} und Omyalite^{®} (Fa. Omya) und Blanc fixe (Fa. Sachtleben) erhältlich.

Die erfindungsgemäße feste Kieselsäurezubereitung wird vorteilhaft nach dem erfindungsgemäßen Herstellverfahren die Schritte enthaltend
(a) Nasszerkleinern der wässrigen Suspension enthaltend die Komponenten (A) und (C) sowie zumindest einen Teil der Komponente (B);
(b) gegebenenfalls zugeben des restlichen Teils der Komponente (B) und
(c) Trocknen der Suspension.
erhalten.

Insbesondere ist von Vorteil, wenn die Komponente (A) eine gegebenenfalls vorhandene Füllstoffkomponente, welche Teil der Komponente (C) sein kann, zunächst in wässriger, zumindest einen Teil der Komponente (B) und als weiterer Bestandteil der Komponente (C) eine Oxidationsmittelkomponente enthaltenden Suspension einer Nasszerkleinerung unterwirft und die Suspension dann, gegebenenfalls nach Zugabe der restlichen Menge an Komponente (B), trocknet.

Die Komponente (A) sowie Teile der Komponente (C) können bei dem erfindungsgemäßen Verfahren als trockenes Pulver oder in Form eines Presskuchens eingesetzt werden.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen festen Kleselsäurezubereitungen gezielt gesteuert werden.

Bei Sprüh- und Wirbelschichtgranulierung können grobteilige Granulate mit mittleren Korngrößen von 50 bis 5000 µm, insbesondere 100 bis 1000 µm, erhalten werden. Durch Sprühtrocknung werden üblicherweise Granulate mit mittleren Korngrößen < 20 µm erhalten. Feinteilige Zubereitungen können bei der Trocknung im Schaufeltrockner und beim Eindampfen mit anschließender Mahlung erhalten werden. Vorzugsweise liegen die erfindungsgemäßen Zubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Die Additive schmelzen bei den Trocknungstemperaturen auf und führen so zur Bildung eines weitgehend kugelförmigen Granulats mit besonders glatter Oberfläche (BET-Werte von in der Regel ≤ 15 m²/g, insbesondere ≤ 10 m²/g).

Die Gaseintrittstemperatur im Sprühturm liegt im Allgemeinen bei 140 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Granulats liegt bevorzugt bei < 5 Gew.-%.

Die erfindungsgemäßen Zubereitungen (Mattierung+Aerosil) zeichnen sich bei der Anwendung in eine flüssige Phase aufweisende Anwendungsmedien durch ihre hervorragenden, den flüssigen Präparationen vergleichbaren, koloristischen Eigenschaften, insbesondere ihrer Mattierungsvermögen, dem geringen Staubverhalten und vor allem durch ihr Stir-in-Verhalten aus, d.h. sie können mit sehr geringem Energieeintrag durch einfaches Einrühren oder Schütteln in den Anwendungsmedien ohne Staubbelastung verteilt werden. Dies gilt insbesondere für die grobteiligen Granulate, die die bevorzugte Ausführungsform der erfindungsgemäßen Zubereitungen darstellen.

Die erfindungsgemäße feste Kieselsäurezubereitung weist insbesondere in Granulatform eine ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation auf.

Die erfindungsgemäßen Zubereitungen eignen sich hervorragend zur Einfärbung von hochmolekularen organischen und anorganischen Materialien jeglicher Art. Flüssige Anwendungsmedien können dabei auch rein wässrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und - butylester und Methoxypropylacetat, aromatischen oder aliphatischen Kohlenwasserstoffen, z.B. Xylol, Mineralöl und Benzin, basieren.

Ein weiterer Gegenstand der vorliegenden Erfindung ist daher ein Verfahren zum Einbringen von festen Kieselsäurezubereitungen in hochmolekulare organische oder anorganische Materialien den Schritt enthaltend
- Eintragen, beispielsweise durch Rühren oder Schütteln, der erfindungsgemäßen festen Kieselsäurezubereitung, gegebenenfalls nach Einbringen in ein geeignetes Lösemittel, in das hochmolekulare organische oder anorganische Material.

Es kann also beispielsweise ein Einrühren der Zubereitungen in ein mit dem jeweiligen Anwendungsmedium verträgliches Lösungsmittel erfolgen, was wiederum mit sehr geringem Energieeintrag möglich ist. Anschließend kann in dieses Anwendungsmedium eingetragen werden. So können z.B. Aufschlämmungen von Zubereitungen in Glykolen oder sonstigen in der Lackindustrie üblichen Lösungsmitteln, wie Methoxypropylacetat, verwendet werden, um auf wässrige Systeme abgestimmte Zubereitungen mit lösemittelhaltigen Lacken und Farben verträglich zu machen.

Als Beispiele für Materialien, die mit den erfindungsgemäßen Zubereitungen versetzt werden können, seien genannt: Lacke, z.B. Bautenlacke, Industrielacke, Fahrzeuglacke, strahlungshärtbare Lacke; Anstrichmittel, sowohl für den Bautenaußen- als auch - innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentgranulat Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergenzien.

Die erfindungsgemäßen Zubereitungen sind auch hervorragend für Kunststoffe geeignet.

Beispielhaft seien hier folgende Kunststoffklassen und Kunststofftypen genannt:
- abgewandelte Naturstoffe:
   Duroplaste, z.B. Casein-Kunststoffe; Thermoplaste, z.B. Cellulosenitrat, Celluloseacetat, Cellulosemischester und Celluloseether;
- synthetische Kunststoffe:
   Polykondensate: Duroplaste, z.B. Phenolharz, Harnstoffharz, Thioharnstoffharz, Melaminharz, ungesättigtes Polyesterharz, Allylharz, Silicon, Polyimid und Polybenzimidazol; Thermoplaste, z.B. Polyamid, Polycarbonat, Polyester, Polyphenylenoxid, Polysulfon und Polyvinylacetal;
   Polymerisate: Thermoplaste, z.B. Polyolefine, wie Polyethylen, Polypropylen, Poly-1-buten und Poly-4-methyl-1-penten, Ionomere, Polyvinylchlorid, Polyvinylidenchlorid, Polymethylmethacrylat, Polyacrylnitril, Polystyrol, Polyacetal, Fluorkunststoffe, Polyvinylalkohol, Polyvinylacetat und Poly-p-xylylen sowie Copolymere, wie Ethylen/Vinylacetat-Copolymere, Styrol/Acrylnitril-Copolymere, Acrylnitril/Butadien/Styrol-Copolymere, Polyethylenglykolterephthalat und Polybutylenglykolterephthalat;
   Polyaddukte: Duroplaste, z.B. Epoxidharz und vernetzte Polyurethane; Thermoplaste, z.B. lineare Polyurethane und chlorierte Polyether.

Die Kunststoffe können vorteilhaft unter geringem Energieeintrag, z.B. durch gemeinsames Extrudieren (vorzugsweise mit einem Ein- oder Zweischneckenextruder), Walzen, Kneten oder Mahlen, mit den erfindungsgemäßen Zubereitungen versetzt werden. Sie können dabei als plastische Massen oder Schmelzen vorliegen und zu Kunststoffformkörpern, Folien und Fasern verarbeitet werden.

Die erfindungsgemäßen Zubereitungen zeichnen sich auch bei der Kunststoffeinfärbung durch insgesamt vorteilhafte Anwendungseigenschaften, vor allem gute Mattierungseigenschaften und die guten rheologischen Eigenschaften der mit ihnen versetzten Kunststoffe, insbesondere niedrige Druckfilterwerte (hohe Filterstandszeiten) und gute Verspinnbarkeit, aus.

Die vorliegende Erfindung wird nachfolgend beispielhaft näher erläutert.

### Beispiele

### Herstellung und Prüfung von erfindungsgemäßen Zubereitungen

Die Herstellung der Zubereitungen erfolgt, indem eine Suspension von a g Kieselsäure (A), b g Additiv (B), c g Oxidationsschutzmittel (C1) und gegebenenfalls d g Füllstoff (C2) in 150 g Wasser (bei pH-Werten < 7 durch Zugabe von 25 gew.-%iger Natronlauge auf einen pH-Wert von 7 eingestellt) in einer Kugelmühle auf einen d₅₀-Wert von < 1 µm gemahlen und dann in einem Laborsprühturm (Mini Spray Dryer B-191, Fa. Büchi; Gaseintrittstemperatur 170°C, Gasaustrittstemperatur 70°C) sprühgetrocknet wird.

Die Bestimmung der Mattierung der Zubereitungen erfolgt farbmetrisch in einem Klarlack einer wasserbasierenden Dispersionsfarbe. Dazu wird eine Mischung von jeweils 1,25 g Zubereitung und 50 g eines wasserbasierenden Prüfbinders auf Styrol/Acrylatbasis (Prüfbinder 00-1627, BASF) in einem 150 ml-Kunststoffbecher mit einem Schnellrührer 3 min bei 1500 U/min homogenisiert. Die erhaltene Farbe wird dann mit einer 100 µm-Spiralrakel auf schwarz/weißen Prüfkarton aufgezogen und 30 min getrocknet.

Die erfindungsgemäßen Zubereitungen zeigen dabei den jeweils analogen handelsüblichen wässrigen Präparationen vergleichbare Mattierung.

In der folgenden Tabelle sind die Zusammensetzungen der hergestellten Zubereitungen aufgeführt. Der Gehalt der Additive (B) bezieht sich dabei, wenn die Polymere in Lösung eingesetzt wurden, auf das gelöste Polymer selbst. Als Additive (B) werden eingesetzt:
- A1:: Kieselsäure: Acematt TS 100 (Evonik);
- A2:: Kieselsäure: Aerosil 200 (Evonik);
- B1:: Blockcopolymerisat auf Basis Ethylendiamin/Propylenoxid/Ethylenoxid mit einem Ethylenoxidgehalt von 40 Gew.-% und einem mittleren Molekulargewicht Mₙ von 12 000;
- B2:: wässrige Lösung eines Copolymerisats aus 40 mol-% Isobuten, 47 mol-% Maleinsäure und 3 mol-% C₁₈-Olefin (Feststoffgehalt: 25%; pH-Wert: 8; M_{w}: 10 000);
- C1:: Oxidationsschutzmittel Irganox 1010 (Ciga SC): 1,0 Gew.-%;
- C2:: Füllstoff: Bariumsulfat Blanc fixe, (Sachtleben).

**Tabelle**

| Beispiele | A1 | A2 | B1 | B2 | C1 | C2 |
|---|---|---|---|---|---|---|
| 1 | 60 | | 20 | 20 | | |
| 2 | 40 | | 20 | 20 | | 20 |
| 3 | 40 | | 20 | 19 | 1 | 20 |
| 4 | | 40 | 20 | 19 | 1 | 20 |
| 5 | 30 | | 20 | 20 | | 30 |
| 6 | 40 | | 30 | 10 | | 20 |
| 7 | 40 | | 37 | 3 | | 20 |
| 8 | 40 | | 36 | 3 | 1 | 20 |

## Patentansprüche

1. Feste Kieselsäurezubereitung, bestehend aus den Komponenten
(A) 20 bis 80 Gew.-% bezogen auf das Gesamtgewicht der Zubereitung einer Kieselsäure;
(B) 20 bis 50 Gew.-% bezogen auf das Gesamtgewicht der Zubereitung mindestens eines Additivs ausgewählt aus der Gruppe bestehend aus ein wasserlösliches nichtionisches oberflächenaktives Additiv auf der Basis von Polyethern, ein wasserlösliches carboxylatgruppenhaltiges oberflächenaktives Additiv, ein Polyurethan, ein anionisches oberflächenaktives Additiv auf der Basis von sauren Phosphorsäure-, Phosphonsäure-, Schwefelsäure- oder Sulfonsäureestern;
(C) gegebenenfalls weitere Komponenten, wobei die weiteren Komponenten keine Pigmente enthalten und die Summe sämtlicher Komponenten (A), (B) und (C) 100 Gew.-% ergeben, wobei
die Komponente (C) zumindest 0,1 bis 5 Gew.-% bezogen auf das Gesamtgewicht der Zubereitung eines Oxidationsschutzmittels enthält.

2. Zubereitung nach Anspruch 1, **dadurch gekennzeichnet, dass** die Komponente (C) weiterhin 0,1 bis 60 Gew.-% eines keine Eigenfarbe aufweisenden Füllstoffs enthält.

3. Zubereitung nach Anspruch 1 oder 2, **dadurch gekennzeichnet, dass** die Komponente (A) einen Anteil von 30 bis 60 Gew.-% bezogen auf das Gesamtgewicht der Zubereitung aufweist.

4. Zubereitung nach einem der Ansprüche 1 bis 3, **dadurch gekennzeichnet, dass** die Komponente (B) einen Anteil von 30 bis 50 Gew.-% bezogen auf das Gesamtgewicht der Zubereitung aufweist.

5. Zubereitung nach einem der Ansprüche 1 bis 4, **dadurch gekennzeichnet, dass** die Komponente (C) weiterhin einen keine Eigenfarbe aufweisenden Füllstoff mit einem Anteil von 10 bis 30 Gew.-% bezogen auf das Gesamtgewicht der Zubereitung aufweist.

6. Verfahren zur Herstellung einer festen Kieselsäurezubereitung nach einem der Ansprüche 1 bis 5, die Schritte enthaltend
(a) Nasszerkleinern der wässrigen Suspension enthaltend die Komponenten (A) und (C) sowie zumindest einen Teil der Komponente (B);
(b) gegebenenfalls zugeben des restlichen Teils der Komponente (B) und
(c) Trocknen der Suspension.

7. Verfahren zum Einbringen einer festen Kieselsäurezubereitung nach einem der Ansprüche 1 bis 5 in hochmolekulare organische oder anorganische Materialen den Schritt enthaltend
• Eintragen der festen Kieselsäurezubereitung, gegebenenfalls nach Einbringen in ein geeignetes Lösemittel, in das hochmolekulare organische oder anorganische Material.

8. Verfahren nach Anspruch 7, **dadurch gekennzeichnet, dass** das Eintragen durch Rühren oder Schütteln erfolgt.

## Claims

1. A solid silica preparation composed of the components
(A) 20% to 80% by weight, based on the total weight of the preparation, of a silica;
(B) 20% to 50% by weight, based on the total weight of the preparation, of at least one additive selected from the group consisting of a water-soluble, nonionic, surface-active additive based on polyethers, a water-soluble, surface-active additive containing carboxylate groups, a polyurethane, an anionic, surface-active additive based on acidic phosphoric, phosphonic, sulfuric or sulfonic esters;
(C) optionally, further components, the further components comprising no pigments, and the sum of all components (A), (B), and (C) making 100% by weight,
component (C) comprising at least 0.1% to 5% by weight, based on the total weight of the preparation, of an antioxidant.

2. The preparation according to claim 1, wherein component (C) furthermore comprises 0.1 % to 60% by weight of a filler which has no intrinsic color.

3. The preparation according to claim 1 or 2, wherein component (A) has a fraction of 30% to 60% by weight, based on the total weight of the preparation.

4. The preparation according to any one of claims 1 to 3, wherein component (B) has a fraction of 30% to 50% by weight, based on the total weight of the preparation.

5. The preparation according to any one of claims 1 to 4, wherein component (C) further has a filler having no intrinsic color with a fraction of 10% to 30% by weight, based on the total weight of the preparation.

6. A method of producing a solid silica preparation according to any one of claims 1 to 5, comprising the steps of
(a) wet-comminuting the aqueous suspension comprising components (A) and (C) and also at least part of component (B);
(b) if appropriate, adding the remaining part of component (B); and
(c) drying the suspension.

7. A method of introducing a solid silica preparation according to any one of claims 1 to 5 into high molecular mass organic or inorganic materials, comprising the step of
• incorporating the solid silica preparation, optionally after introduction into a suitable solvent, into the high molecular mass organic or inorganic material.

8. The method according to claim 7, wherein the incorporation takes place by stirring or shaking.

## Revendications

1. Préparation de silice solide, constituée des composants
(A) 20 à 80 % en poids, par rapport au poids total de la préparation, d'une silice ;
(B) 20 à 50 % en poids, par rapport au poids total de la préparation, d'au moins un additif choisi dans le groupe constitué par un additif tensioactif non ionique hydrosoluble à base de polyéthers, d'un additif tensioactif hydrosoluble contenant des groupes carboxylate, d'un polyuréthane, d'un additif tensioactif anionique à base d'esters acides d'acide phosphorique, phosphonique, sulfurique ou sulfonique ;
(C) éventuellement d'autres composants, les autres composants ne contenant pas de pigments et la somme de tous les composants (A), (B) et (C) étant égale à 100 % en poids,
Le composant (C) contenant au moins 0,1 à 5 % en poids, par rapport au poids total de la préparation, d'un antioxydant.

2. Préparation selon la revendication 1, **caractérisée en ce que** le composant (C) contient en outre 0,1 à 60 % en poids d'une charge ne présentant aucune couleur propre.

3. Préparation selon la revendication 1 ou 2, **caractérisée en ce que** le composant (A) présente une concentration de 30 à 60 % en poids par rapport au poids total de la préparation.

4. Préparation selon l'une quelconque des revendications 1 à 3, **caractérisée en ce que** le composant (B) présente une concentration de 30 à 50 % en poids par rapport au poids total de la préparation.

5. Préparation selon l'une quelconque des revendications 1 à 4, **caractérisée en ce que** le composant (C) comporte en outre une charge ne présentant aucune couleur propre, en une proportion de 10 à 30 % en poids, par rapport au poids total de la préparation.

6. Procédé pour la production d'une préparation de silice solide selon l'une quelconque des revendications 1 à 5, comportant les étapes
(a) broyage par voie humide de la suspension aqueuse contenant les composants (A) et (C) ainsi qu'au moins une partie du composant (B) ;
(b) éventuellement addition de la partie restante du composant (B) et
(c) séchage de la suspension.

7. Procédé pour l'introduction d'une préparation de silice solide selon l'une quelconque des revendications 1 à 5 dans des matériaux inorganiques ou organiques de masse moléculaire élevée, comportant l'étape
introduction de la préparation de silice solide, éventuellement après introduction dans un solvant convenable, dans le matériau inorganique ou organique de masse moléculaire élevée.

8. Procédé selon la revendication 7, **caractérisé en ce que** l'introduction s'effectue par agitation ou secouement.
